(19) Europäisches Patentamt / European Patent Office / Office européen des brevets

(11) **EP 2 517 523 B1**

(12) **FASCICULE DE BREVET EUROPEEN**

(45) Date de publication et mention de la délivrance du brevet:
**15.03.2017 Bulletin 2017/11**

(21) Numéro de dépôt: **10810782.2**

(22) Date de dépôt: **22.12.2010**

(51) Int Cl.:
**H04W 74/08** (2009.01)

(86) Numéro de dépôt international:
**PCT/FR2010/052878**

(87) Numéro de publication internationale:
**WO 2011/077047 (30.06.2011 Gazette 2011/26)**

(54) **PROCÉDÉ ET DISPOSITIF DE RÉGULATION D'ÉMISSION DANS UN RÉSEAU DE TÉLÉCOMMUNICATION SANS FIL**

VERFAHREN UND VORRICHTUNG ZUR REGULIERUNG DER ÜBERTRAGUNGEN IN EINEM DRAHTLOSEN TELEKOMMUNIKATIONSNETZWERK

METHOD AND DEVICE FOR REGULATING TRANSMISSIONS IN A WIRELESS TELECOMMUNICATIONS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2009 FR 0959577**

(43) Date de publication de la demande:
**31.10.2012 Bulletin 2012/44**

(73) Titulaire: **Orange**
**75015 Paris (FR)**

(72) Inventeurs:
• **GALTIER, Jérôme**
**F-06000 Nice (FR)**
• **BROWN, Patrick**
**F-06800 Cagnes Sur Mer (FR)**

(74) Mandataire: **Millet, Sandrine et al**
**Orange**
**IMTW/OLPS/IPL/PAT**
**Orange Gardens**
**44 Avenue de la République**
**CS 50010**
**92326 Châtillon Cedex (FR)**

(56) Documents cités:
**WO-A1-2005/119986 WO-A1-2009/095628**

**Description**

La présente invention concerne le domaine des réseaux de télécommunication sans fil, en particulier des réseaux locaux sans fil ou WLAN (de l'anglais "Wireless Local Access Network") conformes à la famille de normes IEEE 802.11.

De tels réseaux sont également nommés réseaux Wi-Fi. Ils sont utilisés pour mettre en réseau, dans de nombreuses applications, des stations (par exemple des ordinateurs, des assistants personnels et des périphériques).

La norme 802.11 définit dans le document "IEEE 802.11a-1999, IEEE 802, 11b-1999, IEEE-802. 11d-2001, Part 11 : wireless LAN medium access control (MAC) and physical layer (PHY) specificafions" un procédé de régulation du trafic dans le réseau sans fil. Ce procédé utilise un système de fenêtres de congestion (Congestion Window "CW") pour réguler ce trafic. Selon cette norme, pour déterminer l'instant où émettre un paquet de données, une station tire un nombre aléatoire au hasard entre 0 et CW-1, la valeur CW étant un entier compris entre deux valeurs $CW_{min}$ et $CW_{max}$ spécifiées par la norme 802.11.

Cette valeur CW sert de compteur à rebours pour l'émission du paquet, ce compteur étant différé si la station constate qu'une autre station est en train d'émettre. Malheureusement, ce système à fenêtres de congestion génère un nombre important de collisions sur le réseau sans fil, ce qui se traduit, du point de vue de l'utilisateur, par une perte importante de bande passante.

Un autre mécanisme connu sous le nom de "méthode des tournois" est susceptible d'être utilisé par les différentes stations pour réguler les émissions de paquets et limiter le taux de collision. Cette méthode des tournois est décrite dans le document des auteurs Z. Abichar et M. Chang, intitulé "CONTI: Constant Time Contention Resolution for WLAN Access", IFIP Networking 2005.

La méthode des tournois consiste à organiser une sorte de tournoi entre les stations ayant à émettre un paquet. Un tournoi est composé d'un certain nombre de tours de sélection, exécuté chacun pendant un intervalle de temps de durée prédéfinie permettant à chaque station d'avoir le temps d'entendre l'émission de toute autre. Cette durée peut typiquement être égale à la durée de l'intervalle de temps nommé "SlotTime" qui, selon le standard IEEE 802.11, est définie comme intervalle élémentaire dans la procédure de résolution de contention par fenêtre de congestion.

Le fonctionnement d'un tournoi est le suivant. Au début du tournoi, toutes les stations ayant à émettre un paquet sont susceptibles d'être autorisées à émettre ce paquet. A chaque tour de sélection, une ou plusieurs stations sont susceptibles d'être supprimées de la liste des stations autorisées à émettre, selon qu'une autorisation ou une interdiction d'émettre leur est attribuée lors de ce tour de sélection. A l'issue du tournoi, seules les stations non éliminées sont autorisées à émettre. Si plusieurs stations restent en lice à l'issue du tournoi, elles émettent en même temps provoquant ainsi une collision et donc une réception perturbée avec impossibilité de recevoir correctement les paquets de données émis. Ces stations devront alors participer au tournoi suivant pour tenter d'émettre à nouveau ces paquets.

Dans le cas de l'émission de flux de données requérant un accès prioritaire au réseau ou une bande passante élevée, une solution de régulation d'émission, permettant de garantir un niveau de performance en termes de bande passante ou de débit ainsi qu'une qualité de service, est décrite dans le document de brevet publié sous le numéro WO 2009 / 095628.

Ce document décrit un mécanisme de partage équitable de l'accès au réseau entre différentes stations utilisatrices qui permet de gérer la coexistence entre plusieurs classes de paquets. Ce mécanisme prend en compte la classe d'appartenance d'un paquet pour déterminer comment allouer les autorisations ou interdictions d'émettre au cours d'un tournoi. Il est en effet possible grâce à ce mécanisme de contrôler classe par classe la probabilité qu'une station émette un paquet. En particulier, il est possible de favoriser une classe de paquet par rapport à une autre et donc de mettre en place une méthode de gestion de priorités entre classes. De cette manière, le procédé peut être adapté pour chaque classe de paquet selon le besoin propre à une classe.

Il a été constaté toutefois par les inventeurs que ces mises en oeuvre de la méthode des tournois ne sont pas assez performantes dans le cas de coexistence pour un même tournoi de stations ayant à émettre des paquets à des débits différents. En effet, différents standards (par exemple 802.11 b, 802.11 g, 802.11 n ou autres) de la famille 802.11 sont susceptibles d'être mis en oeuvre par des stations participant à un même tournoi. En conséquence, il est possible qu'une première station émette avec un débit moyen de 1 Mbits par seconde, et une autre station avec un débit moyen de 11 Mbits par seconde.

Or compte-tenu de la manière dont sont organisés les tournois, le débit moyen du système comprenant l'ensemble des stations participant à un tournoi, sera le débit le plus bas des paquets à émettre par les différentes stations. En conséquence des stations susceptibles d'émettre avec un débit supérieur à celui fixé pour les paquets à émettre par d'autres stations seront pénalisées par la présence dans le tournoi de ces autres stations.

En outre, pour une même station, le débit avec lequel un ensemble de paquets doit être émis peut varier au cours du temps. Il n'est donc pas possible de connaître à l'avance les besoins respectives des stations participant à un tournoi.

Il apparaît ainsi un besoin pour adapter dynamiquement la méthode des tournois aux débits des paquets à émettre par les différentes stations.

Document WO2005/119986 décrit la favorisation des stations ayant un haut débit lors de leur accès au support, en calculant une probabilité d'émission des paquets.

L'invention concerne selon un premier aspect un procédé de régulation d'émission selon la méthode des tournois, mis en oeuvre par une station ayant au moins un paquet de données à émettre *via* un réseau de communication sans fil avec un débit déterminé, le procédé comprend une étape au cours de laquelle la station détermine si elle participe à un tournoi ou non, la probabilité avec laquelle une station participe à un tournoi étant fonction dudit débit déterminé.

L'invention vise à contrôler la fréquence avec laquelle une station participe à un tournoi, de sorte par exemple à ce que les stations ayant les débits d'émission les plus élevés puissent accéder au réseau plus fréquemment.

En effet, selon un mode de réalisation, dans lequel la probabilité avec laquelle une station participe à un tournoi est d'autant plus élevée que ledit débit déterminé est élevé.

Il n'y a donc plus de limitation des performances de ces stations en raison d'un nombre d'accès limité, égal à celui des autres stations, tel qu'imposé par les méthodes connues. L'invention aboutit ainsi à un partage plus équitable du temps d'accès au réseau pour station rapides et donc à une utilisation plus efficace de ce réseau.

Les performances globales mesurées sur la base du débit global pour un ensemble de stations peuvent être améliorées dans un facteur de l'ordre de grandeur du rapport entre les débits d'émission le plus élevé avec le débit d'émission le plus bas. Par exemple, d'un facteur 10 environ si on se trouve en présence d'une première station avec un débit moyen de 1 Mbits par seconde et d'une autre station avec un débit moyen de 11 Mbits par seconde.

Selon un mode de réalisation, la probabilité est en outre fonction d'un autre paramètre caractéristique dudit paquet à émettre. Ce paramètre est par exemple : la taille du paquet ou la classe de trafic du paquet. Il est ainsi possible d'augmenter la fréquence d'accès au médium radio pour certains paquets selon un critère donné, dépendant des paramètres choisis pour la fonction de calcul retenue.

Selon un mode de réalisation, la probabilité avec laquelle une station participe à un tournoi est égale à 1 lorsque ledit débit déterminé est supérieur à une valeur moyenne de débit ($Q_{moy}$) estimée pour l'ensemble des stations ayant émis un tournoi au cours de précédents tournois. De cette manière, il est possible d'identifier simplement les stations retenues pour participer au tournoi sur la base d'une simple comparaison entre deux valeurs de débit. En outre, la valeur moyenne de débit estimée étant choisie comme valeur de référence pour la comparaison, une adaptation dynamique automatique du nombre de stations participant à un tournoi est obtenue.

Selon un mode de réalisation, la station obtient au début d'un tournoi d'une valeur d'index à partir de laquelle la station détermine les valeurs de probabilités qui lui sont affectées pour les différents tours du tournoi, et dans lequel la station participe à un tournoi si la valeur d'index obtenue se trouve dans l'intervalle [1 - 1 / $Q_{moy}$ ; 1[, où $Q_{moy}$ est une valeur moyenne de débit estimée pour l'ensemble des stations ayant émis un tournoi au cours de précédents tournois. L'invention conserve la méthode de tirage de valeur d'index permettant une répartition statistique aléatoire des valeurs d'index A tirées, et propose une méthode simple de sélection des stations participant à un tournoi sur la base de cette seule valeur d'index.

Selon un mode de réalisation, lorsque la station participe à un tournoi, la station pondère la valeur d'index par le ratio ($Q_{moy}$) de la manière suivante A'= 1 - $Q_{moy}$ (1 - A), la valeur d'index pondérée A' étant utilisée à la place de la valeur A pour déterminer valeurs de probabilités qui sont affectées à la station. Il est garanti ainsi très simplement une répartition statistique aléatoire dans l'ensemble de l'intervalle [0; 1 [ des valeurs d'index A' utilisées pour calculer les valeurs représentant les autorisations / interdictions d'émettre, et ce bien que certaines stations ne participent pas au tournoi.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne selon un deuxième aspect une station ayant au moins un paquet de données à émettre via un réseau de communication sans fil avec un débit déterminé, la station comprenant des moyens pour déterminer si elle participe à un tournoi ou non, la probabilité avec laquelle une station participe à un tournoi étant fonction dudit débit déterminé.

La station selon l'invention comprend des moyens de mise en oeuvre des étapes d'un procédé selon l'invention, notamment un processeur de données et un composant logiciel et/ou matériel de mise en oeuvre de ces étapes.

Selon une autre implémentation, l'invention est mise en oeuvre au moyen de composants logiciels et/ou matériels. Dans cette optique, le terme module peut correspondre dans ce document aussi bien à un composant logiciel ou qu'à un composant matériel. Un composant logiciel correspond à un ou plusieurs programmes d'ordinateur, un ou plusieurs sous-programmes d'un programme, ou de manière plus générale à tout élément d'un programme conçu pour mettre en oeuvre une fonction ou un ensemble de fonctions. Un composant matériel correspond à tout élément d'un ensemble matériel (ou hardware) conçu pour mettre en oeuvre une fonction ou un ensemble de fonctions.

D'autres buts, caractéristiques et avantages de l'invention apparaîtront à travers la description qui va suivre, donnée uniquement à titre d'exemple non limitatif, et faite par référence aux dessins annexés dans lesquels :

- la figure 1 représente un réseau de télécommunication sans fil avec des stations conformes à l'invention dans un mode préféré de réalisation ;
- la figure 2 représente un dispositif de régulation d'émission conforme à l'invention dans un mode préféré de réalisation ;
- la figure 3 représente, sous forme d'organigramme, les principales étapes d'un procédé de régulation d'émission connu dans l'état de la technique ;
- la figure 4 représente, sous forme d'organigramme, les principales étapes d'un procédé de régulation d'émission conforme à l'invention dans un mode préféré de réalisation ;

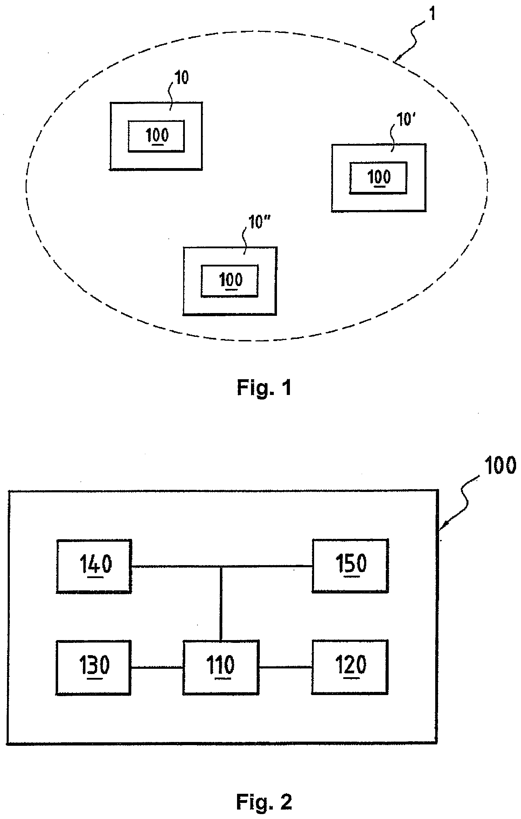

La **figure 1** représente un réseau 1 de télécommunication sans fil dans lequel évoluent des stations 10, 10', 10" conformes à l'invention. Chacune de ces stations 10, 10', 10" comporte un dispositif 100 de régulation d'émission conforme à l'invention.

Dans le mode illustré à la **figure 2,** le dispositif 100 selon l'invention comporte un processeur 110, une mémoire vive 120, une mémoire morte de type ROM 130, un module 140 d'accès au réseau 1, pour émettre et recevoir des paquets et des signaux dans le réseau de télécommunication sans fil 1 et une table de probabilités 150. Ces différents éléments sont reliés entre eux par un système de bus non référencé. Les moyens 140 pour envoyer et recevoir des paquets de données et des signaux sur le réseau de télécommunication sans fil 1 sont, dans l'exemple décrit ici, constitués par une carte d'accès au réseau 1 conforme à la famille de normes IEEE 802.11.

Pour la mise en oeuvre de l'invention, il est fait usage de la méthode des tournois citée en introduction.

Dans la méthode des tournois, telle que décrite par CONTI dans le document référencé ci-dessus, les autorisations ou interdictions d'émettre sont attribuées aux stations en utilisant des variables aléatoires binaires ayant une loi de distribution de Bernoulli. Cette loi de distribution est définie par une probabilité de tirage d'une autorisation d'émettre. Une telle probabilité est ainsi affectée à chaque station et à chaque tour de sélection. Les probabilités sont choisies de préférence de manière à ce que statistiquement le taux de collision soit le plus faible possible. Une procédure pour choisir les probabilités de façon optimale est présentée dans le document "Analysis and optimization of mac with constant size congestion window for WLAN", par J. Galtier, Proceedings on the Third International Conference on Services and Networks communications", INRIA, Library of Congress Number 2007930108, August 2007.

Selon un mode de réalisation particulier, décrit dans le document de brevet WO2007/051946, les probabilités affectées aux différentes stations lors d'un tour de sélection peuvent être fonction des autorisations ou interdictions d'émettre tirées aux tours de sélection précédents, de manière à minimiser le taux de collision.

Les stations 10, 10', 10" comportent chacune un module de gestion d'émission qui permet la mise en oeuvre d'un procédé de régulation d'émission.

Dans la suite de la description les notations suivantes seront utilisées:

- k est l'indice identifiant le tour de sélection au cours d'un tournoi;
- $k_{max}$ est le nombre maximal de tours de sélection pour un tournoi;
- r est une variable aléatoire binaire;
- r(k) est la valeur de la variable aléatoire binaire r tirée au tour de sélection d'indice k; r(k) appartient à l'ensemble {0,1}, la valeur "1" étant représentative usuellement d'une autorisation d'émettre, tandis que la valeur "0" est représentative d'une interdiction d'émettre.

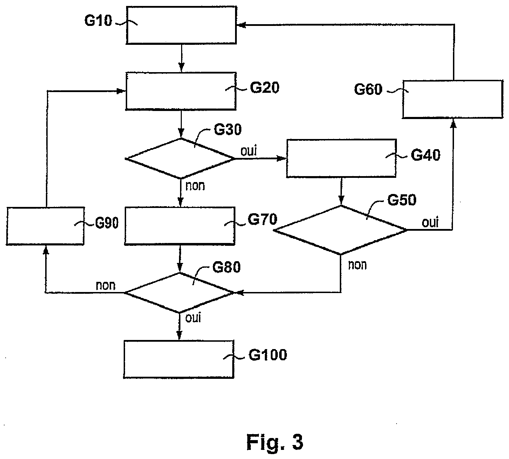

Les principales étapes **G10 à G100** d'un procédé de régulation d'émission selon la méthode décrite dans le document de brevet WO 2009/095628 sont rappelées ici et illustrées par la figure 3. Le lecteur pourra se référer à ce document pour plus de détail sur les fondements mathématiques et performances de cette méthode.

Ce procédé est mis en oeuvre par le module de gestion d'émission d'une station 10 ayant un paquet de données à émettre à travers le réseau 1. Toutes les stations ayant un paquet de données à émettre, mettent en oeuvre simultanément ce même procédé, sans qu'une concertation ou interrogation mutuelle, autre que ce qui est décrit dans les étapes décrites ci-dessous, soit nécessaire entre ces stations.

Le procédé est décrit pour une station 10. Il correspond à ce qu'on appelle un tournoi: il est répété par chaque station tant qu'elle a des paquets à émettre. Les stations ayant des paquets à émettre démarrent toutes au même instant la procédure de résolution de contention par mise en oeuvre d'un tournoi, cet instant étant fonction d'un critère analogue à celui utilisé pour le système de fenêtre de congestion selon le standard IEEE 802.11, c'es-à-dire après une période de temps DIFS1 prédéfinie (qui peut être différente de la période de temps DIFS (DCF Inter Frame Space) définie dans la norme 802.11)

On suppose ici que la classe n affectée à un paquet est codée par une valeur entière comprise dans un intervalle de valeurs [$N_{min}$, $N_{max}$], par exemple [1, 8].

Il est supposé en outre qu'au début d'un tournoi, chaque station ayant des paquets à émettre a connaissance d'une suite de sous-intervalles $[A_n^i, A_n^{i+1}[$ associée à la classe n de paquet à laquelle appartiennent les paquets à émettre par cette station. Il est à noter que la suite de sous-intervalles $[A_n^i, A_n^{i+1}[$ utilisée par une station lors d'un tournoi peut varier d'un tournoi à l'autre, notamment si un mécanisme de type Round Robin ou Weighted Round Robin entre classes de paquet est utilisé. Ces situations sont décrites plus en détail dans le document de brevet WO 2009 / 095628.

Au cours d'une première étape **G10,** la station 10 initialise une variable k à la valeur 1, cette variable représentant l'indice du tour de sélection courant. Lors de cette même étape, chaque station ayant un paquet à émettre détermine une séquence de k valeurs de probabilités r(1) à r(k), qui lui sont attribuées pour le tournoi. Ces valeurs r(1) à r(k) sont stockées en mémoire par la station.

Les k valeurs de probabilités r(1) à r(k) sont déterminées comme suit: lors de cette même étape G10, chaque station ayant un paquet à émettre détermine une valeur d'index A représentative du comportement de la station au cours du tournoi, qui est obtenue par tirage d'une valeur d'une variable aléatoire uniforme prenant ses valeurs dans l'intervalle de valeurs [0, 1[ ou est déduite d'une valeur d'index A utilisée lors d'un tournoi précédent. Plus précisément, cette valeur d'index A représente la probabilité que la station 10 soit autorisée à émettre un paquet à l'issue du tournoi.

Soit Z le nombre total de noeuds feuilles de l'arbre de probabilité associé au tournoi, selon ce qui est décrit dans le document de brevet WO 2009 / 095628. On définit pour chaque classe de paquets n à traiter, une suite de Z+1 valeurs d'index $A_n^i$ appartenant à l'intervalle de valeurs réelles [0,1[ pour 0≤i≤Z, avec $A_n^0 = 0$ et $A_n^Z = 1$. On définit donc au moyen des valeurs d'index $A_n^i$, pour 0≤i≤Z, une partition de l'intervalle de valeurs réelles [0,1[ en Z sous-intervalles $[A_n^i, A_n^{i+1}[$ disjoints.

La station détermine dans quel sous-intervalle $[A_n^i, A_n^{i+1}[$ se trouve la valeur d'index tirée, par comparaison de A avec les différentes valeurs $A_n^i$, pour 0≤i≤Z, où Z représente le nombre total de noeuds feuilles de l'arbre de probabilité utilisé. Dans ce but, les valeurs $A_n^i$ prédéfinies sont de préférence mémorisées en association chacune avec la séquence des valeurs r(1) à r(k) associée à chaque sous-intervalle $[A_n^i, A_n^{i+1}[$, ces valeurs représentants les autorisations / interdictions d'émettre affectées à la station pour les k tours du tournoi courant.

Lorsqu'on se trouve en présence de stations ayant à émettre des paquets de données appartenant à des classes différentes, il est imposé à une station, ayant à émettre un paquet de données appartenant à une classe à traiter en priorité, d'utiliser comme probabilités un ensemble de probabilités lui garantissant d'arriver dans les états représentés par les noeuds feuilles les plus à droite de l'arbre. Celle-ci gagnera le tournoi face à une autre station utilisant comme probabilité un ensemble de probabilités lui garantissant d'arriver dans les feuilles les plus à gauche de l'arbre des probabilités.

Les valeurs r(k) sont donc déterminées à partir d'une valeur d'index initiale unique A : ceci permet s'affranchir d'un tirage de valeur r(k) à chaque tour du tournoi, puisque celles-ci peuvent être déduites directement de la valeur d'index A tirée au départ, tout en garantissant que la répartition, entre les stations, des chances d'émettre soit la même que celle qui aurait été obtenue par tirage effectif de valeur basées sur les probabilités $p_n^k(r(1), ..., r(k))$ affectées aux différents noeuds $N^k(r(1), ..., r(k))$.

A l'étape G20, la station lit en mémoire la valeur r(k) associée au tour de sélection courant.

Cette étape G20 est suivie par une étape **G30** au cours de laquelle on vérifie si la valeur binaire r(k) obtenue à l'étape **G20** est égale à "0".

Si tel est le cas (cas d'une interdiction d'émettre), ce test G30 est suivi par une étape **G40** au cours de laquelle la station 10 écoute le réseau de télécommunication sans fil pour déterminer si une autre station 10', 10" a émis un signal indiquant que cette autre station 10', 10" désire émettre un paquet de données.

Si un tel signal est détecté (résultat du test de l'étape **G50** positif), le procédé se termine par l'étape **G60,** sans que la station 10 ait émis son paquet de données. Au cours de cette étape G60, la station 10 attend la fin des tours de sélection et l'émission éventuelle d'un paquet par une autre station 10', 10'' avant d'exécuter à nouveau l'étape G10 d'initialisation déjà décrite.

En revanche, si à l'étape G40 aucun signal n'est détecté (résultat du test de l'étape G50 négatif), ce test est suivi par un test à l'étape G80 au cours duquel on détermine si le tour k est le dernier tour de sélection, ce qui revient à vérifier si la variable k est égale à la valeur $k_{max}$. Si tel est le cas, la station 10 émet son paquet de données au cours d'une étape G100. Comme décrit dans le document de brevet WO 2009 / 095628, dans le cas où toutes les branches de l'arbre de probabilité ne sont pas de même longueur, le test de l'étape G80 est remplacé par un test consistant à vérifier si le noeud correspondant à la valeur r(k) est un noeud feuille.

En revanche, si k est strictement inférieur à $k_{max}$, le résultat du test de l'étape G80 est négatif. Cette étape est alors suivie par une étape **G90** au cours de laquelle on incrémente la valeur de la variable k d'une unité, en vue de l'exécution du tour de sélection suivant.

Si au cours du test de l'étape **G30,** il est déterminé que la valeur binaire tirée est égale à la valeur prédéterminée 1 (cas d'une autorisation d'émettre), ce test G30 est suivi par une étape **G70** d'émission d'un signal indiquant que la station 10 désire émettre un paquet de données sur le réseau.

Cette étape G70 d'émission d'un signal est suivie par l'étape **G80** déjà décrite au cours de laquelle on vérifie si le tour de sélection courant k est le dernier tour de sélection. Si tel est le cas, ce test G80 est suivi par l'étape **G100** d'émission du paquet de données par la station 10. En revanche, si tel n'est pas le cas, ce test G80 est suivi par l'étape **G90** d'incrémentation déjà décrite.

L'étape **G90** d'incrémentation est suivie par une nouvelle exécution des étapes G20 à G80 déjà décrites, pour le tour de sélection suivant et selon la logique d'enchaînement des étapes qui vient d'être décrite.

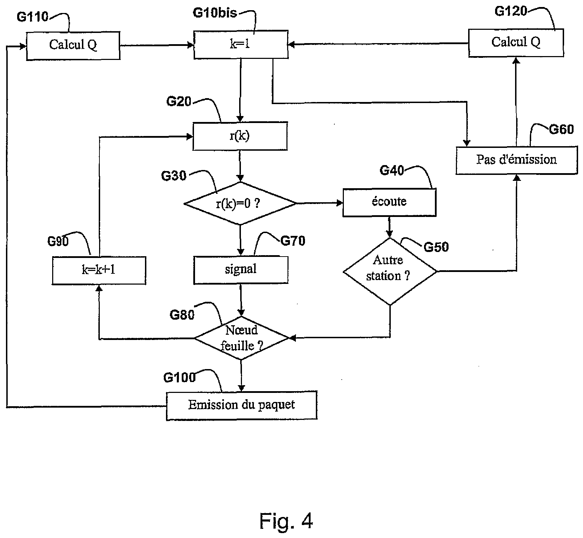

Le procédé selon l'invention est décrit plus en détail par référence à la figure 4. Il est mis en oeuvre par une station 10. Lors de ce procédé, il est déterminé un débit moyen $q_{moy}$, estimé pour l'ensemble des stations participant à un tournoi. Il est défini en outre un ratio Q, rapport entre la valeur du débit moyen $q_{moy}$ et une valeur de débit minimal $q_{min}$ correspondant au débit d'émission courant le plus faible susceptible d'être utilisé pour l'émission d'un paquet par les stations participant à un même tournoi:

$$Q_{moy} = \frac{q_{moy}}{q_{min}}$$

Le ratio $Q_{moy}$ est donc un débit moyen normé, c'est-à-dire dont la valeur est toujours comprise entre 0 et 1. A l'initialisation du procédé, la valeur du débit moyen $Q_{moy}$ est par exemple choisie arbitrairement égale à la 1. Chaque station participant à un tournoi mémorise cette valeur de $Q_{moy}$ et la met à jour à l'issue de chaque tournoi.

La figure 4 représente un organigramme des différentes étapes d'un mode de réalisation du procédé selon l'invention.

Les étapes G20 à G100 représentées à la figure 4 sont identiques aux étapes G20 à G100 déjà décrites en relation avec la figure 3.

L'étape G10 de la figure 3 est cependant remplacée par une étape G10bis dans le procédé selon l'invention, lors de laquelle une valeur d'index pondérée A' est utilisée en lieu et place de la valeur d'index A pour le calcul des valeurs de probabilités lors de l'étape G10, selon ce qui est expliqué ci-dessous.

Lors de cette étape G10bis, la station obtient la valeur d'index A : elle est soit tirée au hasard dans l'intervalle [1 - 1/ $Q_{cour}$ ;1[, soit déduite d'une valeur d'index A précédente, où $Q_{cour}$ est la valeur normée du débit courant $q_{cour}$ avec laquelle la station considérée doit émettre un paquet:

$$Q_{cour} = \frac{q_{cour}}{q_{min}}$$

Lors de cette étape G10bis, la station détermine à partir de la valeur d'index A si elle doit ou non participer à un tournoi. Cette station ne participe au tournoi courant que si la valeur A obtenue est dans l'intervalle [1 -1 / $Q_{moy}$ ; 1[.

Lorsque la station ne participe pas au tournoi, deux modes de réalisation sont possibles. Selon un premier mode de réalisation, l'étape G60 est exécutée suite à l'étape G10bis. Selon un deuxième mode de réalisation, les valeurs r(1) à r(k) sont toutes arbitrairement fixées à 0 et la station participe au tournoi avec ces valeurs, exécutant donc les étapes G20, G30, G40, G50, G60 et G120 à chaque tour de tournoi.

Lorsque la station participe au tournoi, elle utilise une valeur d'index pondérée A' déterminée selon la formule (2) ci-dessous :

$$A' = 1 - Q_{moy} * (1 - A) \qquad (2)$$

pour déterminer dans quel sous-intervalle $[A_n^i, A_n^{i+1}[$ dans lequel se trouve la valeur d'index A' et pour en déduire les valeurs r(1) à r(k) qui lui sont affectées, de la même manière que cela a été décrit lorsque ces valeurs sont déduites de la valeur A.

L'étape G20 est exécutée suite à l'étape G10bis avec les valeurs de probabilité r(1) à r(k) ainsi déterminées. Les autres étapes G30 à G100 s'enchaînent comme décrit au regard de la figure 3.

A l'étape G110, identique à l'étape G120, lorsque, suite à l'exécution d'un tournoi lors duquel une station gagnante a émis à l'étape G100 un paquet avec un débit d'émission $q_{émis}$, la station met à jour la valeur de débit moyen $Q_{moy}$ à partir de la valeur normée $Q_{émis} = \dfrac{q_{émis}}{q_{min}}$ du débit d'émission utilisé, de manière à ce que la valeur $Q_{moy}$ soit une moyenne glissante des débits utilisés lors de précédents tournois pour émettre un paquet.

La formule de calcul de la moyenne est par exemple

$$Q_{moy} = Q_{moy}^{\frac{4}{5}} Q_{émis}^{\frac{1}{5}} \qquad (5)$$

ou encore

$$Q_{moy} = \sqrt[5]{Q_{émis_1} Q_{émis_2} Q_{émis_3} Q_{émis_4} Q_{émis_5}} \qquad (6)$$

où $Q_{émis1}$, $Q_{émis2}$, $Q_{émis3}$, $Q_{émis4}$, $Q_{émis5}$, sont les valeurs normées des débits d'émission de paquet $q_{émis1}$, $q_{émis2}$, $q_{émis3}$, $q_{émis4}$, $q_{émis5}$, utilisés par les stations gagnantes des cinq derniers tournois. Par cette méthode ou par une méthode de filtrage équivalente, on évite une modification trop rapide de la valeur du ratio $Q_{moy}$ qui aurait pour conséquence une instabilité dans les émissions de paquets réalisés par les différentes stations.

Lorsqu'une station est gagnante du tournoi, elle a connaissance du débit d'émission $q_{émis}$. Dans le cas contraire, par écoute du canal radio et extraction des informations dans l'entête du paquet émis, elle obtient la valeur du débit d'émission $q_{émis}$.

En cas de collision, cependant, il n'est pas possible de connaître un débit d'émission correspondant à un paquet émis. Dans ce cas, la valeur du débit moyen $Q_{moy}$ est par exemple inchangée ou bien mise à jour avec la valeur $Q_{émis} = \dfrac{q_{émis}}{q_{min}}$ du débit d'émission utilisé pour le précédent envoi de paquet sans collision.

A l'issue de l'étape G110 (respectivement G120), la station dispose d'une nouvelle valeur de débit $Q_{moy}$ avec laquelle elle participe au tournoi suivant: la station exécute à nouveau un tournoi avec la valeur du ratio $Q_{moy}$ mise à jour, c'est-à-dire l'étape G10bis, puis l'enchaînement des étapes G20 à G100.

Le but recherché est que la valeur de débit $Q_{moy}$, mise à jour lors de l'étape G110 (respectivement G120) par toutes les stations participant à un tournoi, soit connue et partagée par toutes les stations, sans que celles-ci aient à transmettre une information sur cette valeur. Il est possible cependant que la valeur calculée par une station diffère de celle calculée par les autres (par exemple parce que celle-ci ne s'est connectée au réseau qu'après les autres stations): la méthode de calcul proposée permet de lisser au cours du temps les différences possibles entre stations. De telles différences n'affectent donc pas de manière sensible les performances obtenues par le procédé selon l'invention.

L'obtention de la valeur d'index A peut se faire de différentes manières: soit elle est tirée au hasard dans l'intervalle [0;1[, soit elle est déduite d'une valeur d'index A précédente selon ce qui est décrit ci-dessous.

Dans le cas par exemple de mise en oeuvre d'une méthode Round Robin entre station d'un même classe n de paquet, la valeur d'index A utilisée lors d'une phase du Round Robin n'est en effet pas tirée au hasard, mais calculée à partir de la valeur d'index A utilisée au cours de la phase précédente, de la manière suivante:

$$A = A + (A_n^i - 1) / Q_{moy} - 1 / Q_{cour} \qquad (3)$$

si la station gagne le tournoi, et sinon

$$A = A + (A_n^i - 1) / Q_{moy} \qquad (4)$$

où $[A_n^i, A_n^{i+1}[$ est l'intervalle correspondant à la suite de valeurs r(1)...r(k) affectée à la station gagnante du tournoi précédent et où $Q_{cour}$ est la valeur courante avec laquelle la station doit émettre un paquet au prochain tournoi.

Selon un mode de réalisation, la valeur de $Q_{cour}$ (respectivement $Q_{émis}$) est une fonction positive des caractéristiques d'un paquet à émettre (respectivement d'un paquet émis), faisant intervenir tout ou partie des paramètres suivants:

- la vitesse de modulation du signal (débit d'émission $q_{cour}$, respectivement $q_{émis}$),
- la taille du paquet,
- la classe de trafic du paquet.

De préférence, la valeur $Q_{cour}$ (respectivement $Q_{émis}$) est une fonction croissante de la vitesse de modulation (débit d'émission $q_{cour}$, respectivement $q_{émis}$).

En choisissant la fonction de calcul de la valeur $Q_{cour}$ (respectivement $Q_{émis}$) de manière appropriée, il est possible d'augmenter la fréquence d'accès au médium radio pour certains paquets selon un critère donné, dépendant des paramètres choisis pour la fonction de calcul retenue.

## Revendications

1. Procédé de régulation d'émission selon la méthode des tournois, mis en oeuvre par une station ayant au moins un paquet de données à émettre *via* un réseau de communication sans fil avec un débit déterminé, **caracterisé en ce qu'**il comprend une étape au cours de laquelle la station détermine si elle participe à un tournoi ou non, la probabilité avec laquelle une station participe à un tournoi étant fonction dudit débit déterminé.

2. Procédé selon la revendication 1, dans lequel la probabilité avec laquelle une station participe à un tournoi est d'autant plus élevée que ledit débit déterminé est élevé.

3. Procédé selon la revendication 1, dans lequel la probabilité est en outre fonction d'un autre paramètre caractéristique dudit paquet à émettre.

4. Procédé selon la revendication 1, dans lequel la probabilité avec laquelle une station participe à un tournoi est égale à 1 lorsque ledit débit déterminé est supérieur à une valeur moyenne de débit ($Q_{moy}$) estimée pour l'ensemble des stations ayant émis un paquet au cours de précédents tournois.

5. Procédé selon la revendication 1, dans lequel

   - la station obtient (G10) au début d'un tournoi une valeur d'index (A) à partir de laquelle la station détermine les valeurs de probabilités qui lui sont affectées pour les différents tours du tournoi, et
   - la station participe à un tournoi si la valeur d'index (A) obtenue se trouve dans l'intervalle $[1 - 1 / Q_{moy} ; 1[$, où $Q_{moy}$ est une valeur moyenne de débit estimée pour l'ensemble des stations ayant émis un paquet au cours de précédents tournois.

6. Procédé selon la revendication 5, lorsque la station participe à un tournoi, la station pondère la valeur d'index (A) par le ratio ($Q_{moy}$) de la manière suivante A'= 1 - $Q_{moy}$ (1 - A), la valeur d'index pondérée A' étant utilisée à la place de la valeur A pour déterminer valeurs de probabilités qui sont affectées à la station.

7. Procédé selon la revendication 5, la valeur d'index utilisée pour un tournoi est calculée en fonction d'une valeur d'index utilisée pour un tournoi précédent.

8. Procédé selon la revendication 7, dans lequel la valeur d'index utilisée pour le prochain tournoi est égale à

$$A = A + ( A_n^i - 1 ) / Q_{moy} - 1 / Q_{cour} \qquad (3)$$

si la station a gagné le tournoi précédent, et sinon

$$A = A + ( A_n^i - 1 ) / Q_{moy} \qquad (4)$$

où

$[ A_n^i , A_n^{i+1} [$ est l'intervalle correspondant à la suite de valeurs r(1)...r(k) affectée à la station gagnante du tournoi précédent et où

$Q_{cour}$ est la valeur de débit avec laquelle la station doit émettre un paquet au prochain tournoi,
$Q_{moy}$ est une valeur moyenne de débit estimée pour l'ensemble des stations ayant émis un paquet au cours de précédents tournois.

9. Procédé selon la revendication 5, la valeur d'index utilisée pour un tournoi est tirée aléatoirement dans l'intervalle de valeur [1 - 1 / $Q_{cour}$ ; 1[, où $Q_{cour}$ est une valeur normée dudit débit déterminé.

10. Support d'enregistrement lisible par un processeur de données sur lequel est enregistré un programme comprenant des instructions de code de programme pour l'exécution des étapes d'un procédé selon l'une des revendications 1 à 9.

11. Station ayant au moins un paquet de données à émettre *via* un réseau de communication sans fil selon la méthode des tournois avec un débit déterminé, la station comprenant des moyens pour déterminer si elle participe à un tournoi ou non, la probabilité avec laquelle une station participe à un tournoi étant fonction dudit débit déterminé.

12. Station selon la revendication 11 comprend des moyens de mise en oeuvre des étapes d'un procédé selon l'une quelconque des revendications 2 à 9.

**Patentansprüche**

1. Verfahren zur Senderegulierung nach der Turniermethode, das von einer Station eingesetzt wird, die mindestens ein Datenpaket über ein drahtloses Kommunikationsnetzwerk mit einer bestimmten Datenmenge zu senden hat, **dadurch gekennzeichnet, dass** es einen Schritt umfasst, während dessen die Station bestimmt, ob sie an einem Turnier teilnimmt oder nicht, wobei die Wahrscheinlichkeit, mit der eine Station an einem Turnier teilnimmt, von der bestimmten Datenmenge abhängt.

2. Verfahren nach Anspruch 1, bei dem die Wahrscheinlichkeit, mit der eine Station an einem Turnier teilnimmt, umso höher ist, als die bestimmte Datenmenge hoch ist.

3. Verfahren nach Anspruch 1, bei dem die Wahrscheinlichkeit ferner von einem weiteren charakteristischen Parameter des zu sendenden Pakets abhängt.

4. Verfahren nach Anspruch 1, bei dem die Wahrscheinlichkeit, mit der eine Station an einem Turnier teilnimmt, gleich 1 ist, wenn die bestimmte Datenmenge größer als ein mittlerer Durchgangswert ($Q_{moy}$) ist, der für die Gesamtheit der Stationen, die ein Paket während vorheriger Turniere gesandt haben, geschätzt wird.

5. Verfahren nach Anspruch 1, bei dem

- die Station zu Beginn eines Turniers einen Indexwert (A) erhält (G10), auf dessen Basis die Station die Werte von Wahrscheinlichkeiten bestimmt, die ihr für die verschiedenen Runden des Turniers zugewiesen werden, und
- die Station an einem Turnier teilnimmt, wenn sich der erhaltene Indexwert (A) in dem Intervall [1 - 1 / $Q_{moy}$ ; 1[ befindet, wobei $Q_{moy}$ ein mittlerer Durchgangswert ist, der für die Gesamtheit der Stationen, die ein Paket während vorheriger Turniere gesandt haben, geschätzt wird.

6. Verfahren nach Anspruch 5, bei dem, wenn die Station an einem Turnier teilnimmt, die Station den Indexwert (A) durch das Verhältnis ($Q_{moy}$) auf folgende Weise gewichtet: A' = 1 - $Q_{moy}$ ( 1 - A), wobei der gewichtete Indexwert A' an Stelle des Werts A verwendet wird, um Wahrscheinlichkeitswerte zu bestimmen, die der Station zugewiesen werden.

7. Verfahren nach Anspruch 5, bei dem der für ein Turnier verwendete Indexwert in Abhängigkeit von einem für ein vorheriges Turnier verwendeten Indexwert berechnet wird.

8. Verfahren nach Anspruch 7, bei dem der für das nächste Turnier verwendete Indexwert gleich

$$A = A + (A^i_n - 1) / Q_{moy} - 1 / Q_{cour} \qquad (3)$$

ist, wenn die Station das vorherige Turnier gewonnen hat, und andernfalls

$$A = A + (A^i_n - 1) / Q_{moy} \qquad (4)$$

wobei

$[A^i_n, A^{i+1}_n[$ das Intervall ist, das der Folge von Werten r(1) ... r(k) entspricht, die der Station zugewiesen ist, die das vorherige Turnier gewonnen hat, und wobei
$Q_{cour}$ der Durchgangswert ist, mit dem die Station ein Paket beim nächsten Turnier senden muss,
$Q_{moy}$ ein mittlerer Durchgangswert ist, der für die Gesamtheit der Stationen, die ein Paket während vorheriger Turniere gesandt haben, geschätzt wird.

9. Verfahren nach Anspruch 5, bei dem der für ein Turnier verwendete Indexwert zufällig in dem Werteintervall [1 - 1 / $Q_{cour}$ ; 1[ bestimmt wird, wobei $Q_{cour}$ ein Normwert der bestimmten Datenmenge ist.

10. Von einem Datenprozessor lesbarer Aufzeichnungsträger, auf dem ein Programm aufgezeichnet ist, umfassend Programmcodebefehle für die Ausführung der Schritte eines Verfahrens nach einem der Ansprüche 1 bis 9.

11. Station, die mindestens ein Datenpaket über ein drahtloses Kommunikationsnetzwerk nach der Turniermethode mit einer bestimmten Datenmenge zu senden hat, wobei die Station Mittel umfasst, um zu bestimmen, ob sie an einem Turnier teilnimmt oder nicht, wobei die Wahrscheinlichkeit, mit der eine Station an einem Turnier teilnimmt, von der bestimmten Datenmenge abhängt.

12. Station nach Anspruch 11, umfassend Mittel für den Einsatz der Schritte eines Verfahrens nach einem der Ansprüche 2 bis 9.


**Claims**

1. Method for regulating transmission according to the tournament scheme, implemented by a station having at least one data packet to be transmitted via a wireless communication network with a determined bitrate, **characterized in that** it comprises a step in the course of which the station determines whether or not it participates in a tournament, the probability with which a station participates in a tournament being dependent on said determined bitrate.

2. Method according to Claim 1, in which, the higher said determined bitrate, the higher is the probability with which a station participates in a tournament.

3. Method according to Claim 1, in which the probability is furthermore dependent on another parameter characteristic of said packet to be transmitted.

4. Method according to Claim 1, in which the probability with which a station participates in a tournament is equal to 1 when said determined bitrate is greater than a mean bitrate value ($Q_{moy}$) estimated for the set of stations that have transmitted a packet in the course of previous tournaments.

5. Method according to Claim 1, in which

- the station obtains (G10) at the start of a tournament an index value (A) on the basis of which the station determines the probability values which are assigned to it for the various rounds of the tournament, and
- the station participates in a tournament if the index value (A) obtained lies in the interval [1 - 1 / $Q_{moy}$; 1[, where $Q_{moy}$ is a mean bitrate value estimated for the set of stations that have transmitted a packet in the course of previous tournaments.

6. Method according to Claim 5, when the station participates in a tournament, the station weights the index value (A) by the ratio ($Q_{moy}$) in the following manner A'= 1 - $Q_{moy}$ (1 - A), the weighted index value A' being used in place of the value A to determine probability values which are assigned to the station.

7. Method according to Claim 5, the index value used for a tournament is calculated as a function of an index value used for a previous tournament.

8. Method according to Claim 7, in which the index value used for the next tournament is equal to

$$A \;=\; A \;+\; (A_n^{\,i} \;-\; 1) \;/\; Q_{moy} \;-\; 1 \;/\; Q_{cour} \qquad (3)$$

if the station has won the previous tournament, and otherwise

$$A \;=\; A \;+\; (A_n^{\,i} \;-\; 1) \;/\; Q_{moy} \qquad (4)$$

where

[$A_n^{\,i}$, $A_n^{\,i+1}$[ is the interval corresponding to the series of values r(1)...r(k) assigned to the winning station of the previous tournament and where
$Q_{cour}$ is the bitrate value with which the station must transmit a packet at the next tournament,
$Q_{moy}$ is a mean bitrate value estimated for the set of stations that have transmitted a packet in the course of previous tournaments.

9. Method according to Claim 5, the index value used for a tournament is randomly drawn in the interval of value [1 - 1 / $Q_{cour}$; 1[, where $Q_{cour}$ is a normed value of said determined bitrate.

10. Recording medium readable by a data processor on which is recorded a program comprising program code instructions for the execution of the steps of a method according to one of Claims 1 to 9.

11. Station having at least one data packet to be transmitted via a wireless communication network according to the tournament scheme with a determined bitrate, the station comprising means for determining whether or not it participates in a tournament, the probability with which a station participates in a tournament being dependent on said determined bitrate.

12. Station according to Claim 11 comprises means for implementing the steps of a method according to any one of Claims 2 to 9.

**Fig. 1**

**Fig. 2**

**Fig. 3**

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009095628 A
- WO 2005119986 A

- WO 2007051946 A


**Littérature non-brevet citée dans la description**

- wireless LAN medium access control (MAC) and physical layer (PHY) specificafions. *IEEE 802.11a-1999*
- **Z. ABICHAR ; M. CHANG.** CONTI: Constant Time Contention Resolution for WLAN Access. *IFIP Networking,* 2005

- **J. GALTIER.** Analysis and optimization of mac with constant size congestion window for WLAN. *Proceedings on the Third International Conference on Services and Networks communications", INRIA, Library of Congress Number 2007930108,* Août 2007